# EUROPEAN PATENT SPECIFICATION

(11) **EP 4 052 840 B1**
(45) Date of publication and mention of the grant of the patent: **01.01.2025**
(21) Application number: 22159263.7
(22) Date of filing: 28.02.2022
(51) Int. Cl.: B23Q 1/03, B23Q 1/00

(54) **WORKPIECE LOCKING SYSTEM FOR MACHINING CENTRES**
WERKSTÜCKVERRIEGELUNGSSYSTEM FÜR BEARBEITUNGSZENTREN
SYSTÈME DE VERROUILLAGE DE PIÈCE POUR CENTRES D'USINAGE

(30) Priority: 05.03.2021 IT 202100005249
(43) Date of publication of application: 07.09.2022
(73) Proprietor: C.M.S. S.p.A., 24019 Zogno (BG) (IT)
(72) Inventor: MANTEGA, Claudio, 60019 Senigallia (AN) (IT); BAGGIARINI, Elia, 61023 Macerata Feltria (PU) (IT)
(74) Representative: Luppi Intellectual Property S.r.l.

(56) References cited:
- EP-A2- 1 110 667
- WO-A1-2021/000976
- US-A1- 2007 069 436
- US-A1- 2009 140 482
- US-A1- 2019 314 940
- US-A1- 2020 379 429

## Description

### Background of the invention

The invention relates to a workpiece locking system for machining centres, in particular a system that is suitable for locking at least one non-flat slab-shaped workpiece that has to be machined in a numerically controlled machining centre.

Specifically, but not exclusively, the invention can be applied to lock workpieces with a complex surface shape, for example a surface with double curvature, also for workpieces of relatively reduced dimensions, in particular for workpieces made of composite material or light alloys.

In particular, the present invention relates to a locking system comprising a multiplicity of locking members, for example of the suction type (suction cups), positionable in such a manner as to define a non-flat locking surface configured to maintain in a work position a workpiece with a non-flat surface, in which each locking member is carried by a support rod that extends vertically and is movable vertically independently of the other support rods to make positioning of the respective locking member at a different height from the other locking members possible.

Locking systems of this type are already known, for example from patent publication WO 2015/019210 of the same applicant.

Patent publication US 2009/140482A1 discloses a workpiece locking system as in the preamble of claim 1.

Various aspects of the prior art are improvable.

Firstly, it is desirable to make available a constructionally cheap and simple locking system, in particular enabling engineering of the system itself to be optimized.

Secondly, it is desirable to succeed in simplifying the various fitting operations and possible maintenance of the locking system.

### Summary of the invention

One object of the invention is to overcome one or more of the aforesaid limits and drawbacks of the prior art.

One object is to devise a workpiece locking system for machining centres that is alternative to known systems.

One advantage is to provide a locking system for machining centres that is constructionally cheap and simple, in particular a locking system with a structure that enables the engineering thereof to be optimized.

One advantage is to simplify the various fitting operations and possible 20220285 EP-EN maintenance of the locking system.

One advantage is to devise a locking system that is easily reconfigurable, in particular a locking system that is reconfigurable avoiding using disposable material.

One advantage is to provide a locking system with a great number of rest zones for the workpiece and then with a relatively reduced pitch between the zones thereof, so as to obtain great continuity in locking, together with significant adaptability of the system to a great variety of workpiece formats.

Such objects and advantages and others still are achieved by a locking system according to one or more of the claims set out below.

In one embodiment, a locking system comprises a modular structure with a plurality of blocks and plate means on which said locks are arranged next to one another, each lock comprising two or more locking members that define a non-flat locking surface and, for each locking member, a support rod that carries the respective locking member and which is movable vertically independently of the other support rods, each lock comprising at least one interface surface and at least one operating circuit configured for the operation of the respective lock and being part of said interface surface, said plate means comprising an interface side interfaced with the interface surfaces of said locks and at least one operating circuit communicating with said operating circuits of the blocks at said interface side.

Every single block, or elementary unit of the modular structure of the locking system, may be, in particular, independent of the other blocks, being configured to receive one or more supplies (in particular of electric and/or pneumatic type) at the moment of fitting the block to a work plane comprising plate means configured to receive a plurality of blocks.

Each block may feature, in particular, pneumatic control means and/or electric control means (pneumatic solenoid valves and corresponding supply and/or discharge circuits, including command and control connections, for example by field buses and control electronics that are also integrated into the block).

A single block may be inspected and/or replaced (in particular from above) substantially at any moment.

### Brief description of the drawings

The invention can be better understood and implemented with reference to the attached drawings that show a non-limiting embodiment thereof, in which:

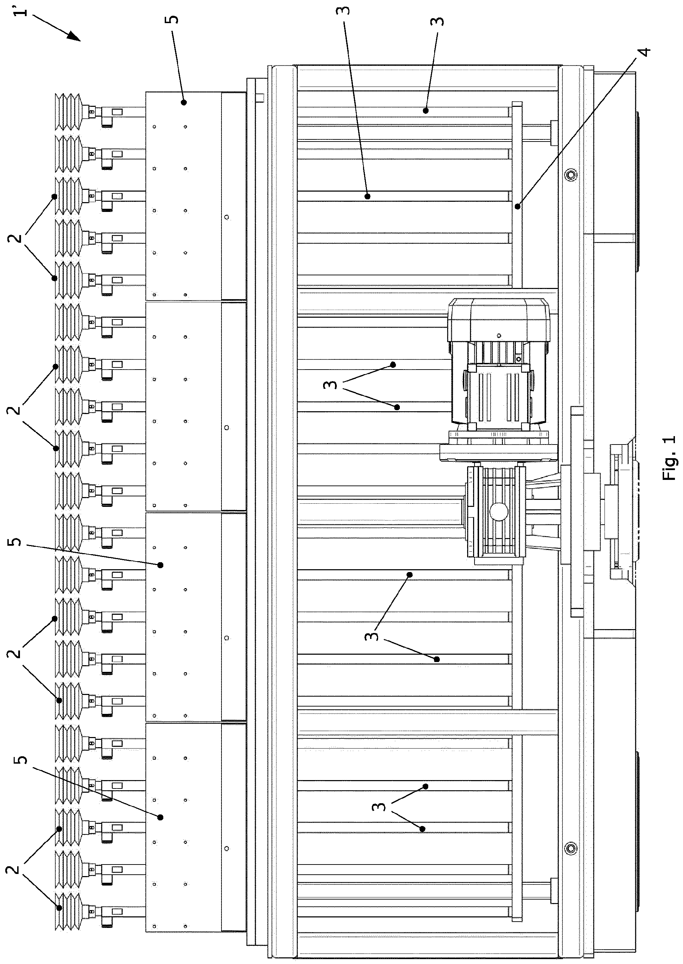

Figure 1 is a vertical raised side view of one embodiment of a locking system according to the invention, with all the locking members in a configuration that is lowered to the lower height;
Figure 2 shows the locking system of Figure 1, with all the locking members in a configuration that is raised to the upper height;
Figure 3 shows the locking system of Figure 1, during a step of positioning the locking members at the desired heights;

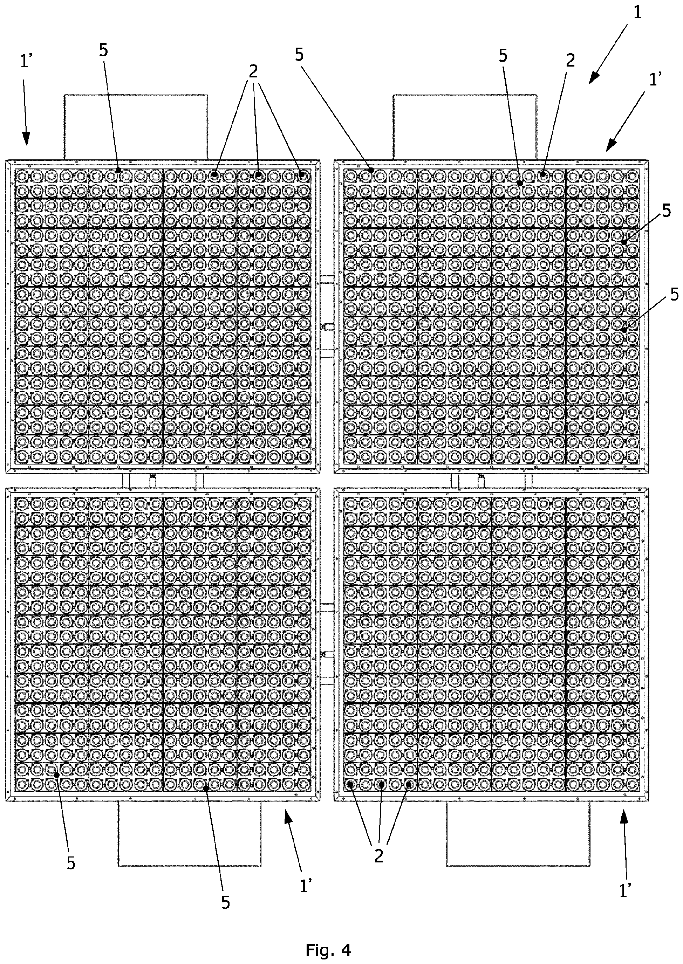

Figure 4 is a top plan view of a work surface that comprises four locking systems like those of Figure 1;

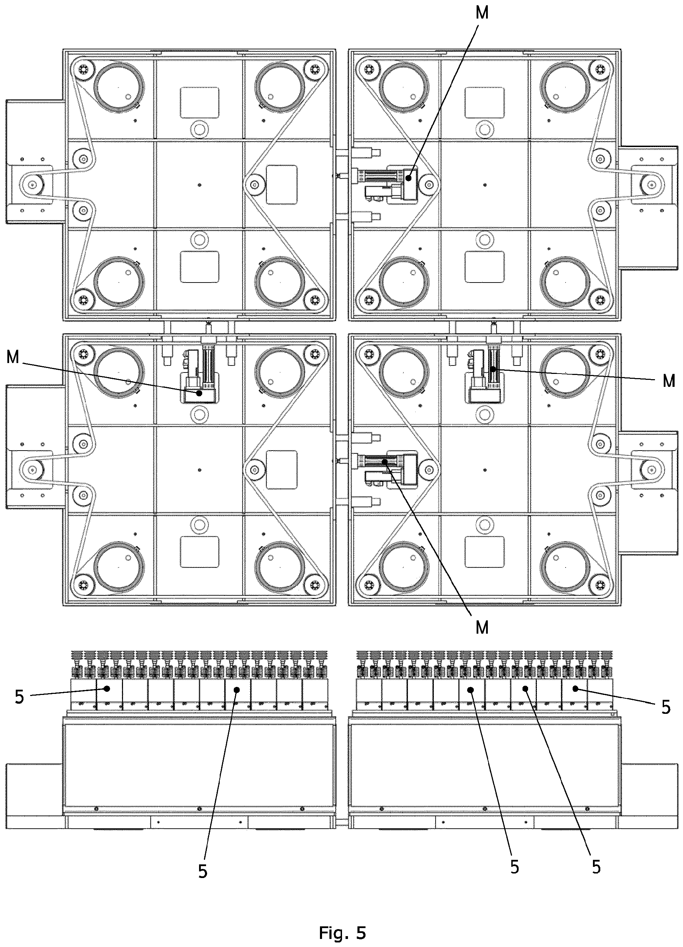

Figure 5 shows, below, a side view in a vertical elevation of the work plane of Figure 4 and, above, the bottom plan view of Figure 4 with some parts removed to highlight others better;

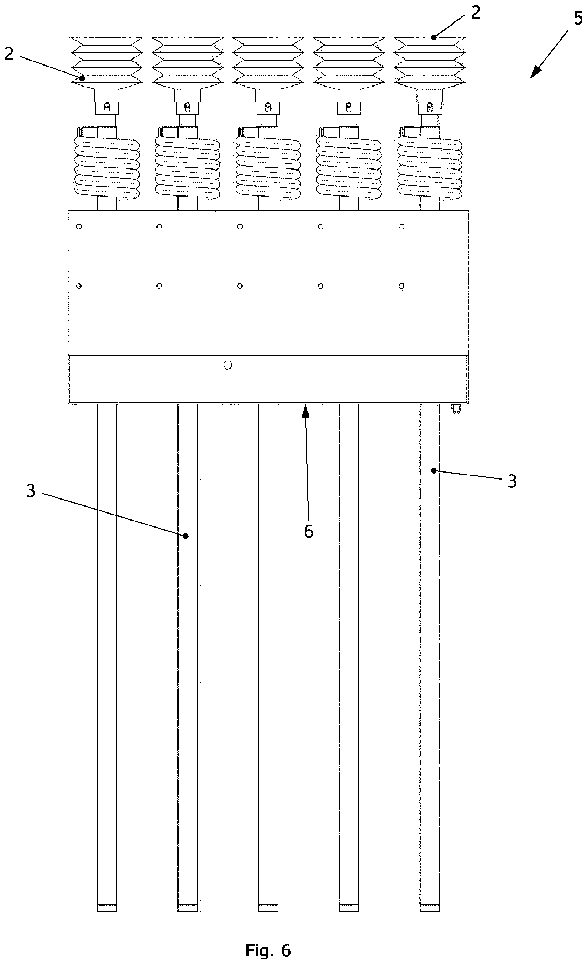

Figure 6 is a vertical raised view of a long side of a single block of the modular structure that forms the locking system of Figure 1;

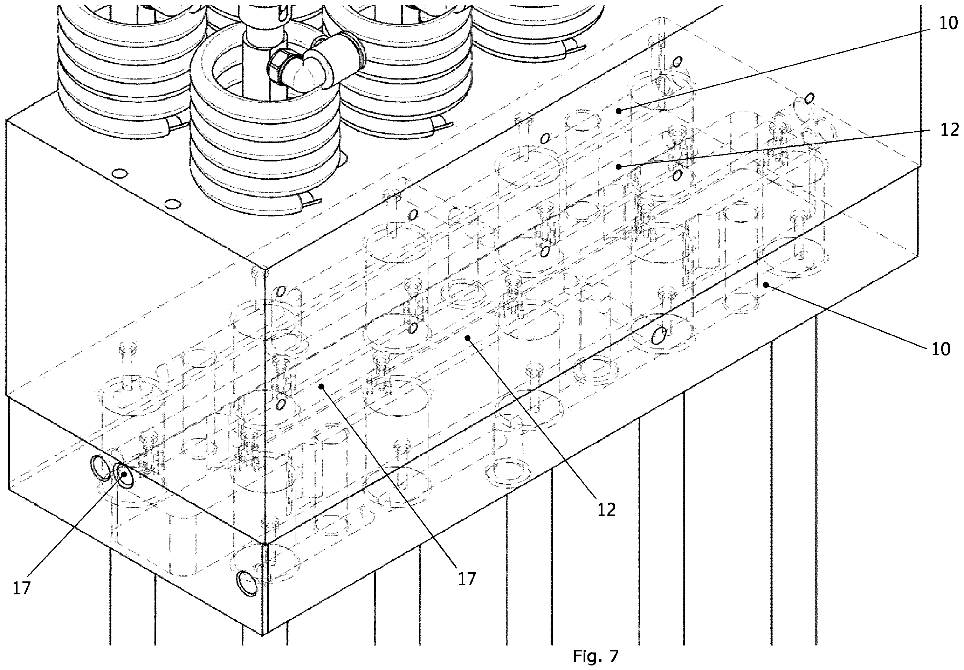

Figure 7 is a partial perspective view of a detail of the block of Figure 6 with some inner parts in a dashed line;

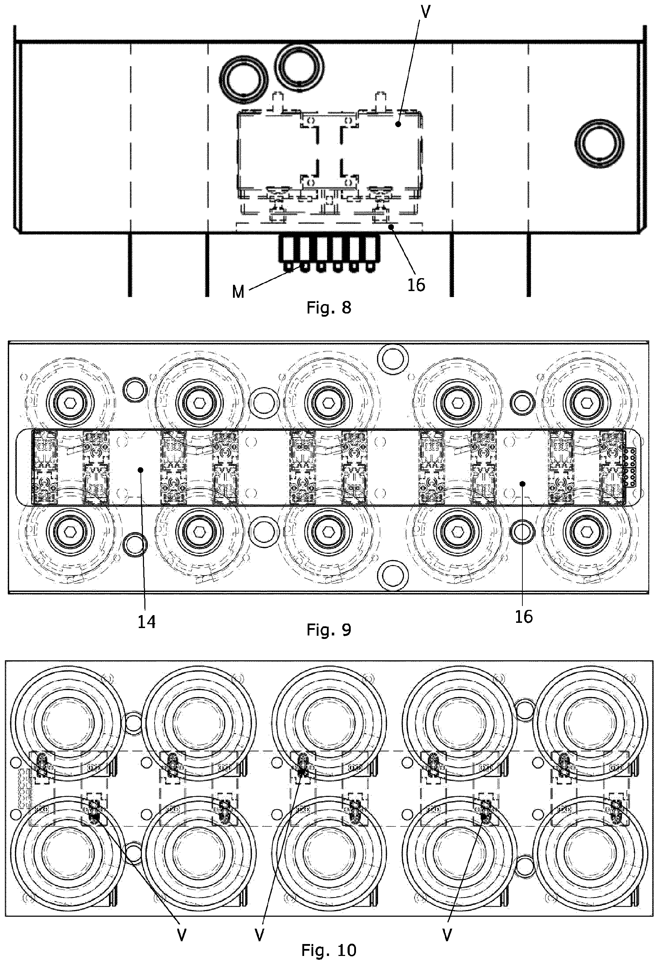

Figure 8 is a partial view in a vertical elevation of a short side of the block of Figure 6 with some inner parts in a dashed line;
Figures 9 and 10 are two plan views, respectively from below and from above, of the block of Figure 6 with some parts removed to highlight others better;

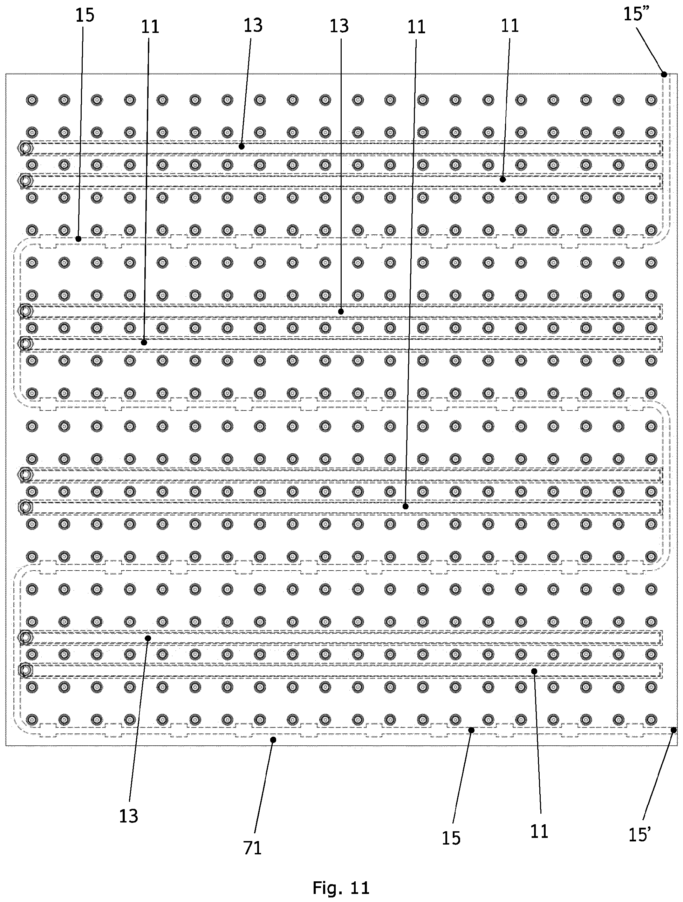

Figure 11 is a bottom plan view of the lower plate of the plate means of the block of Figure 6 with some inner parts in a dashed line;

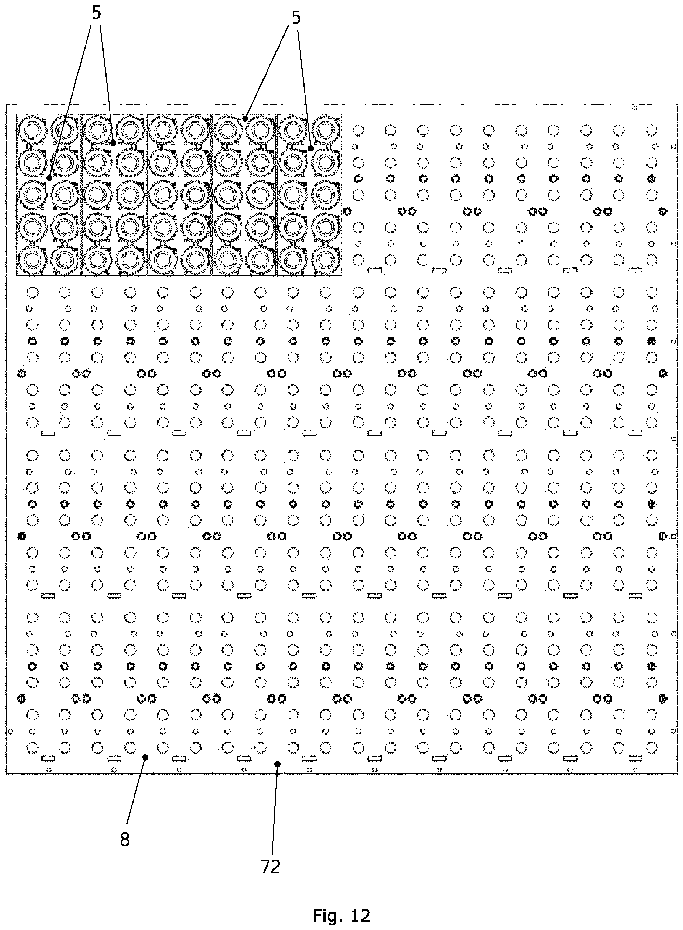

Figure 12 is a top plan view of the upper plate of the plate means of the block of Figure 6 with some blocks fitted;

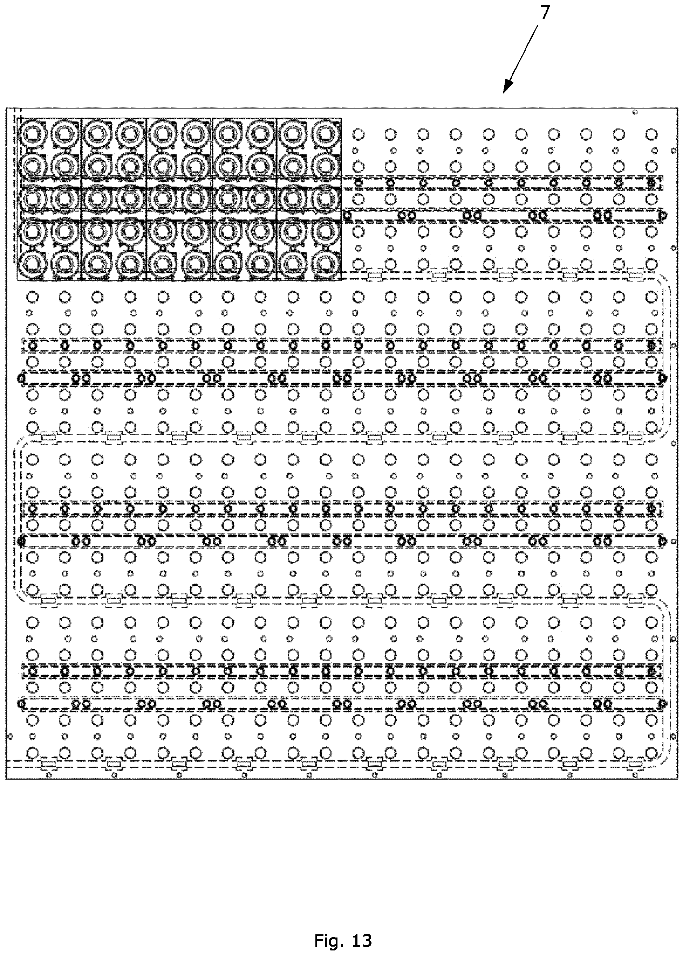

Figure 13 is a top plan view of the lower and upper plates of Figures 11 and 12 superimposed on one another;

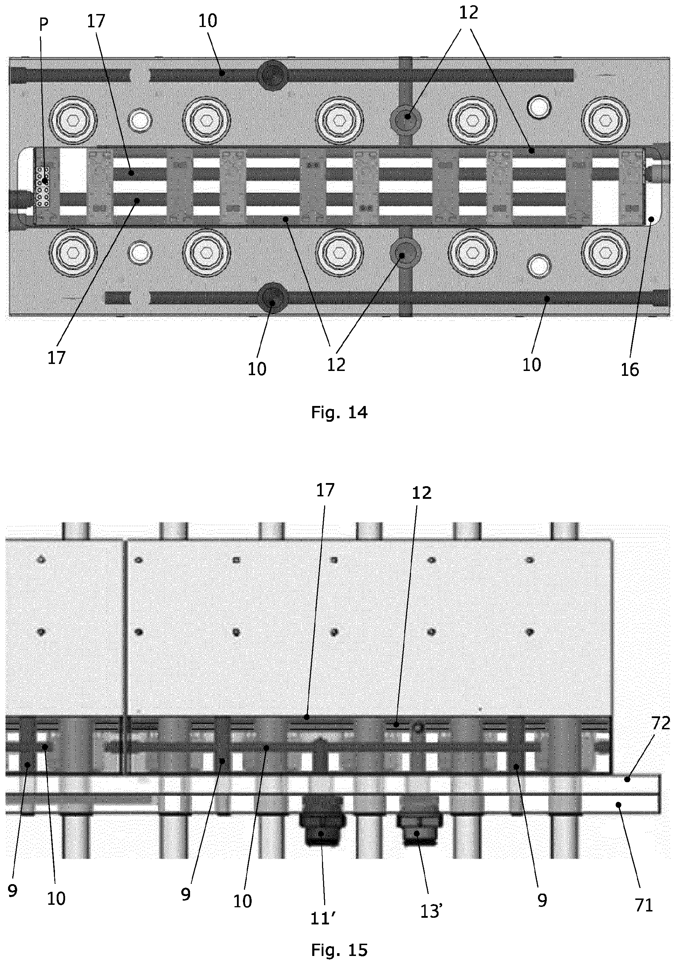

Figure 14 is a bottom plan view of the block of Figure 6 in which the operating paths inside the block have been highlighted;
Figure 15 a partial view in a vertical elevation of the system of Figure 1 in which the interface zone between the plate means and a block has been highlighted;

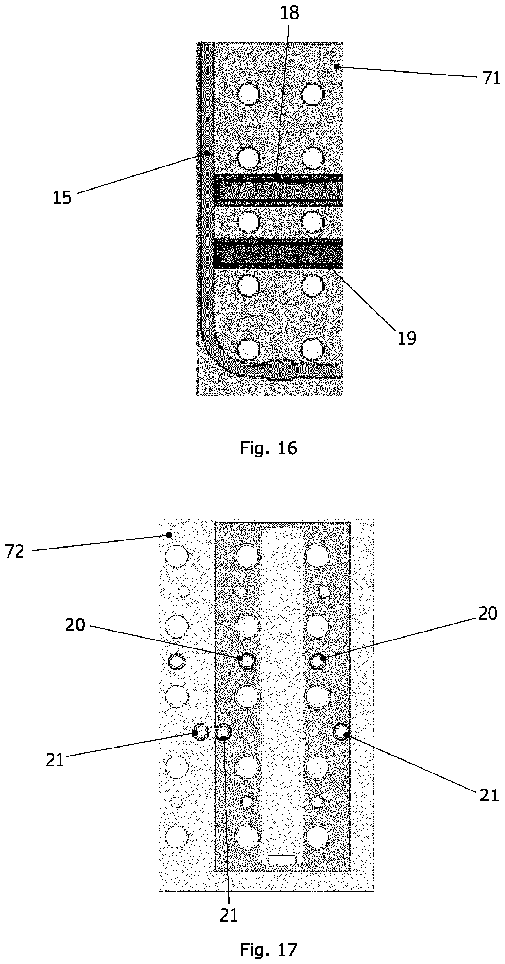

Figure 16 shows an enlarged detail of the lower plate of Figure 11 highlighting the seal means between the lower plate and the upper plate;
Figure 17 shows an enlarged detail of the lower plate of Figure 12 highlighting the sealing means between the upper plate and a block;

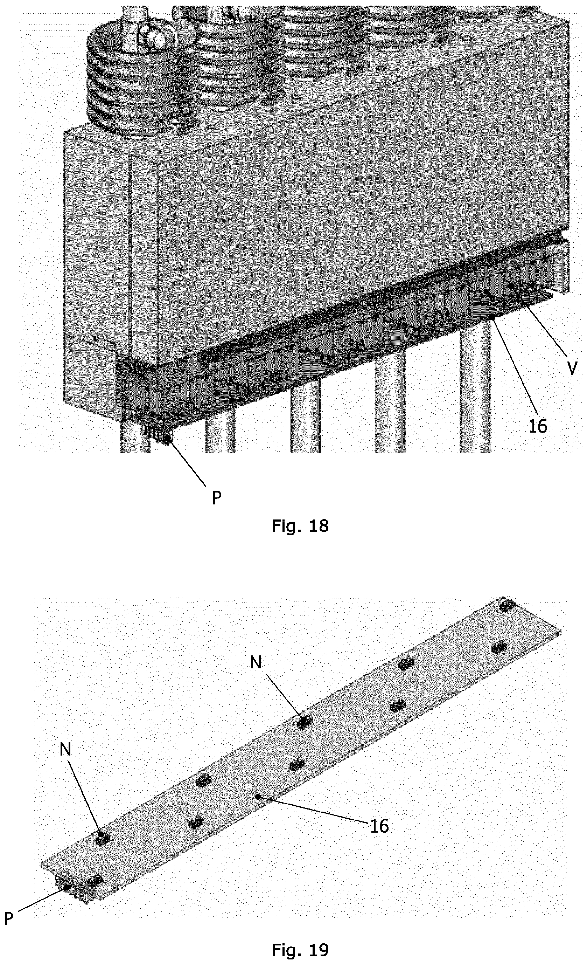

Figure 18 is a partial perspective view of a detail of the block of Figure 6 with some parts removed to highlight others better;
Figure 19 shows the printed circuit of the block of Figure 6.

### Detailed description

With reference to the aforesaid figures, with 1 a locking system for locking workpieces has been indicated overall that is usable, in particular, in a machining centre. The locking system 1 may be suitable, in particular, for locking in a work position at least one non-flat slab-shaped workpiece that has to be machined in a numerically controlled machining centre. The locking system 1 may be applied, in particular, to lock workpieces with a complex surface, for example a surface with a double curve, also for workpieces of relatively reduced dimensions, in particular for workpieces of composite material, carbon fibre, light alloys, metal, plastics or yet other materials.

The numerically controlled machining centre, in particular for machining workpieces made of aluminium, plastics, composite materials, etc, may be suitable, for example, for machining workpieces used in the aerospace and/or car industry. The machining centre may be provided, in particular, with one or more operating units (for example of known type), each of which may be controlled on two or more linear translation axes and/or one or more rotation axes for machining the workpiece. The aforesaid one or more operating units may be, for example, arranged on a portal that is movable along the work surface, and be in turn moveable along the portal crosspiece. The machining centre may be configured, for example, to perform cutting and/or milling and/or drilling and/or contouring and/or welding and/or still other tasks.

The locking system 1 comprises four or more locking or gripping members 2, positionable in such a manner as to define a non-flat locking surface configured to maintain a workpiece (in the form of a slab or sheet) with a non-flat (for example dual curvature) surface locked in a fixed machining position.

In the specific embodiment illustrated here, the locking system 1 comprises sixteen hundred locking members 2 arranged next to one another. The locking members 2 may be divided into one or more groups 1'. In the specific embodiment, the locking members 2 are divided into four groups 1' in which each group (for example of a substantially square plan shape) includes four hundred locking members 2 in a matrix arrangement (twenty by twenty). It is anyway possible to provide any other number and/or arrangement of the locking members 2.

Each locking member 2 may comprise, in particular, a locking member, or gripping member or vacuum member, for example a suction cup, in particular a suction cup orientable in space, for example of the bellows type.

The locking system 1 comprises for each locking member 2, a support rod 3 that extends vertically and carries (at the top) a respective locking member 2. Each support rod 3 may be, in particular, movable vertically independently of the other support rods 3, to make possible positioning of the respective locking member 2 at a height that is different from that of the other locking members 2.

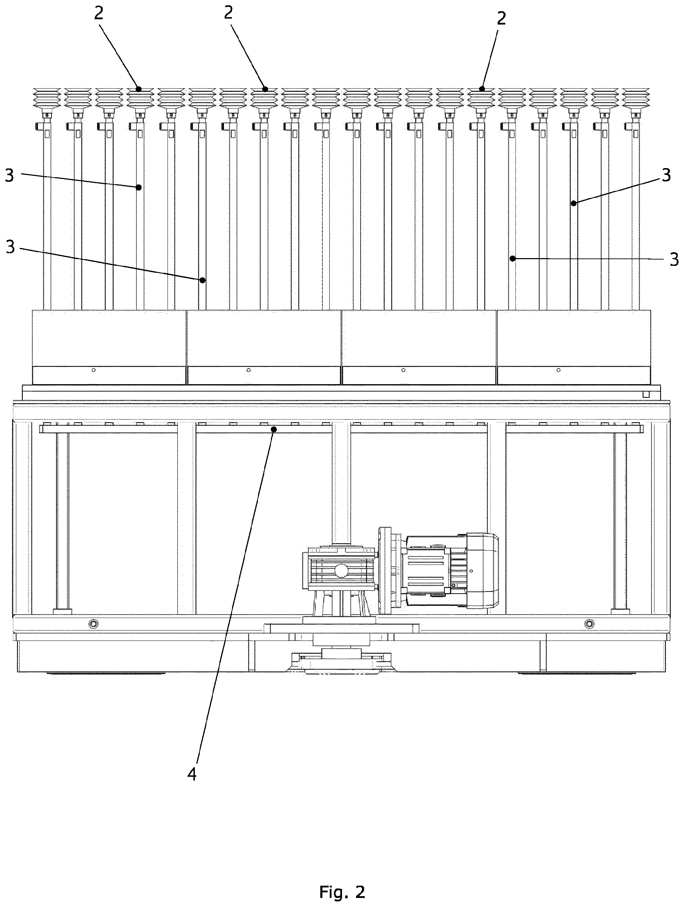

Positioning the various locking members 2 may comprise, in particular, a first step (Figure 2) in which the locking members 2 are raised to a maximum height, for example by a lifting table 4 (movable vertically up and down by a motor-driven control on guide columns) on which the lower ends of the support rods 3 rest and which can push the locking members 2 upwards. It is possible to arrange a lifting table 4 for each group of locking members 2. In the specific embodiment, four lifting tables 4 are arranged, which are drivable independently of one another, one for each group of locking members 2.

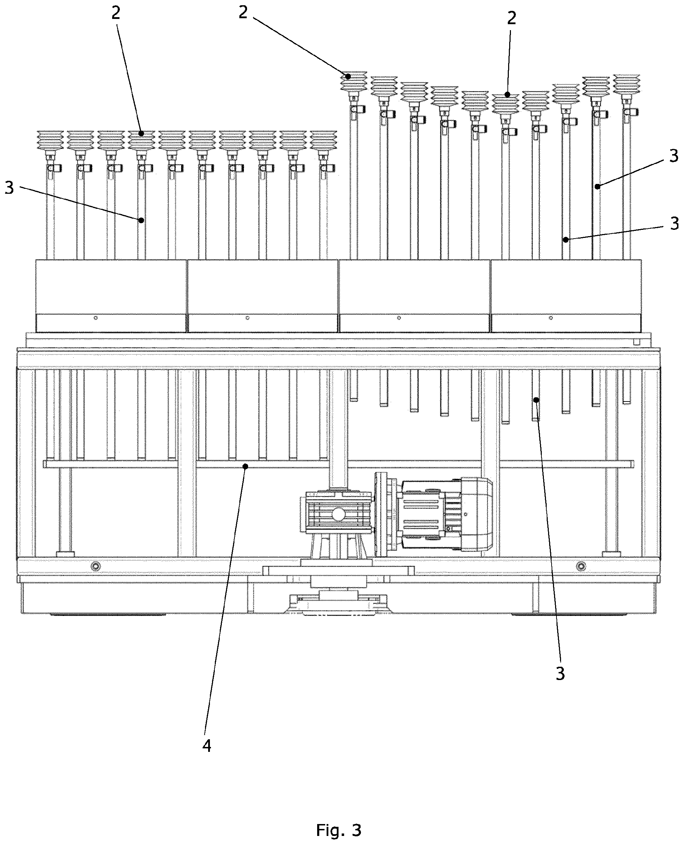

In a second positioning step (Figure 3), the lifting table 4 performs a controlled descent movement, in such a manner as to lower the locking members 2 the support rods 3 of which rest on the respective lifting table 4. When the lifting table 4, during descent, reaches a designed positioning height of at least one locking member 2, then the support rod 3 of that specific locking member 2 is locked in position, in particular by the action of a brake. It is possible, in particular, for the lifting table 4 to be stopped during driving of the brake. Each support rod 3 may be, in particular, provided with a respective brake, which may be, in particular, drivable independently of the brakes of the other support rods 3. The lifting table 4 then continues its descent as far as positioning of all the locking members 2 considered to be suitable for locking the workpiece.

The descent and ascent movement of each lifting table 4 may be controlled, in particular, by a respective reduction gear (in this specific embodiment, four reduction gears for four lifting tables 4).

The positioning device and method disclosed above enables the time to be reduced that is necessary to position the locking members 2.

The locking system 1 comprises two or more blocks 5 or modules. The various blocks 5 may be, in particular, the same as one another. In this specific embodiment, each block 5 comprises ten locking members 2 with a matrix arrangement (in particular two by five). It is however possible for every single block 5 to include a different number and/or a different arrangement of locking members 2. Each block 5 may comprise, in particular, a main body for supporting and/or containing the various components of the block, for example a parallelpipedon-shaped main body. The main body may be made, in particular, of a metal (for example of steel), or also of other materials.

Each block 5 comprises at least two holes (axial and vertical, obtained in the main body) within each of which the support rod 3 of a respective locking member 2 is movable vertically. Each block 5 is associated with at least two locking members 2 (in the specific embodiment, as said, each block 5 is associated with ten locking members 2 and includes ten rod passage holes). Each block 5 may comprise, in particular, at least one interface surface 6. The interface surface 6 may be, in particular, arranged on a lower (horizontal) side of the respective block 5.

The locking system 1 comprises plate means 7 comprising an interface side 8 interfaced with the aforesaid interface surfaces 6 of the various blocks 5. The interface side 8 may be, in particular, a (horizontal) upper side of the plate means 7. The plate means 7 may comprise, in particular, at least four holes (in this specific embodiment sixteen hundred holes divided into four groups 1' of four hundred holes) within each of which a respective support rod 3 of a locking member 2 is movable vertically.

The locking system 1 comprises connecting means 9 of removable type configured to fit each block 5 on the plate means 7 so that each block 5 is fittable and removable independently of the other blocks 5. The connecting means 9 of removable type may comprise, in particular, screw fixing means.

The various blocks 5 are fitted next to one another, forming a modular structure, extending horizontally, with a vertical side of a block 5 arranged adjacent to and contiguous with a vertical side of another block 5, so that each block 5 of the modular structure (apart from the blocks 5 arranged only on the perimeter of the modular structure) is adjacent to and contiguous with another four blocks 5 of the modular structure at the four vertical sides thereof.

The locking system 1 may comprise, in particular, for each block 5, at least one operating circuit on the block side arranged on the respective block. An operating circuit means a circuit (electric, fluid, magnetic, mechanical, etc) that is usable to perform at least one function (for example transmission of energy and/or transmission of signals) as part of the locking system 1.

The operating circuit on the block side may be configured, in particular, for the operation of the respective block 5, as will be explained better below. The operating circuit on the block side may comprise, in particular, at least one end arranged on the interface surface 6 of the respective block 5. This end may be, in particular, a connection end configured to permit connection to another circuit (in particular to a circuit arranged on the plate means 7) similar to and outside the respective block 5 to which the operating circuit on the block side belongs.

The locking system 1 may comprise, in particular, at least one operating circuit on the plate side arranged on the plate means 7. The operating circuit on the plate side may be, in particular, in communication with the various operating circuits on the block side of the aforesaid blocks 5, at the interface side 8, in particular through the aforesaid ends arranged on the interface surfaces 6 of the various blocks 5.

The operating circuit on the block side may comprise, in particular, a fluid operating circuit, like, for example, a vacuum pneumatic circuit 10 configured, in particular, for operation of the locking members 2 when such members include vacuum locking members (suction cups). Each block 5 may thus comprise a vacuum pneumatic circuit 10 obtained inside the main body of the block itself. The operating circuit on the plate side may comprise, in particular, a vacuum pneumatic circuit 11 connected to the vacuum pneumatic circuits 10 arranged on the various blocks 5.

The operating circuit on the block side may comprise, in particular, a fluid operating circuit, like, for example, a pneumatic circuit under pressure 12 for the operation of at least one pneumatic actuator arranged on the block 5 and operationally associated with a respective locking member 2. This pneumatic actuator may comprise, in particular, a brake, for example the brake used, as disclosed previously, to lock in position the support rod 3 during the second positioning step (controlled descent step of the lifting table 4 and of the support rods 3 that rest thereupon). Each block 3 may thus comprise a pneumatic circuit under pressure 12 obtained inside the main body of the block itself. The operating circuit on the plate side may comprise, in particular, a pneumatic circuit under pressure 13 connected to the pneumatic circuit under pressures 12 arranged on the various blocks 5.

The operating circuit on the block side may comprise, in particular, an electric circuit 14 for the operation of at least one electric actuator arranged on the block 5 and operationally associated with a respective locking member 2. This electric actuator may comprise, in particular a solenoid valve V, for example a solenoid valve configured to control the vacuum pneumatic circuit 10, or a solenoid valve configured to control the pneumatic circuit under pressure 12. The operating circuit on the plate side may comprise, in particular, an electric circuit 15 connected to the electric circuits 14 arranged on the various blocks 5.

The electric circuit 14 of the operating circuit on the block side may comprise, in particular, for each block 5, at least one electric device 16 configured to receive electric energy from the electric circuit 15 of the operating circuit on the plate side and configured to control the electric actuators (for example the solenoid valves V) operationally associated with the locking members 2 of the respective block 5. The electric device 16 may comprise, in particular, as in this embodiment, a printed circuit configured, in particular, to include the transmission of energy through the driving of the electric actuators and the transmission of the signals to pilot the actuators (in particular communication signals by field buses).

The electric device 16 (printed circuit) may comprise, in particular, a main connector P (or node, with the energy connecting means, for example 24 V, and the signal connecting means, for example CAN-bus) arranged for connection to the electric circuit 15 of the operating circuit on the plate side. The electric device 16 (printed circuit) may comprise, in particular, a plurality (for example ten) of supply connectors N of the single solenoid valves V, for example connectors loaded with elastic means, in particular of pogo-pin type.

The locking system 1 may comprise, in particular, for each block 5, at least one fluid discharge circuit 17 arranged on the respective block 5 and configured to permit the fluid coming from the fluid operating circuit to be discharged, in particular from the pneumatic circuit under pressure 12.

The operating circuit on the plate side may comprise, in particular, connecting means connectable to an operating source. The operating circuit on the plate side may comprise, in particular, connecting means 11' (for example a vacuum connection) connectable to a vacuum gas source and/or connecting means 13' (for example a connection for compressed air) connectable to a pressurized gas source and/or connecting means 15', 15" (for example an inlet 15' and an outlet 15") connectable to a source of electric energy.

The plate means 7 may comprise, in particular, a lower plate 71 and an upper plate 72 that are superimposed on one another. The lower plate 71 may comprise, in particular, at least one or a part of or all the operating circuits on the plate side. The upper plate 72 may comprise, in particular, the interface side 8.

It is possible to arrange, between the lower plate 71 and the upper plate 72, sealing means configured for the hermetic seal of the fluid operating circuit (in particular sealing means 18 for the pneumatic circuit under pressure 13 and/or sealing means 19 for the vacuum pneumatic circuit 11). The sealing means 18 and/or the sealing means 19 may comprise, in particular a washer.

The interface side 8 of the plate means 7 may comprise, in particular, a plurality of openings, for example at least one opening for each block 5. In particular, the openings may be arranged on the upper plate 72. The openings may be used, in particular, to place the operating circuit/s on the plate side in communication with the operating circuits on the block side of the various blocks 5.

Each opening may be, in particular, in fluid communication with a fluid operating circuit (in particular with the pneumatic circuit under pressure 13 and/or with the vacuum pneumatic circuit 11). In the specific embodiment, the interface side 8 comprises, for communication with each block 5, two openings for the pneumatic circuit under pressure 12 and two openings for the vacuum pneumatic circuit 10, although it is possible to provide a different number of openings.

It is possible to arrange between the interface side 8 and the various interface surfaces 6, sealing means configured for the hermetic seal of each opening (in particular sealing means 20 for the pneumatic circuit under pressure 12 and/or sealing means 21 for the vacuum pneumatic circuit 10). The sealing means 20 and/or the sealing means 21 may comprise, in particular a washer.

It is possible to devise a numerically controlled machining centre (not shown) comprising at least one machining unit (for example a machining unit of known type) and at least one locking system for supporting workpieces as disclosed previously.

The locking or gripping member 2, may comprise, as said, a suction cup, for example a concertina suction cup. The locking member 2 may be able to adapt to the curvature of the workpiece. The vacuum could be communicated to the vacuum locking member by a conduit obtained inside the support rod 3 that is movable vertically and by a flexible spiral pipe 22, with a first end fixed to the main body of the block 5 and a second end, opposite the first, fixed to and movable with the support rod 3.

As has been seen, each block 5 features inside both the pneumatic circuit under pressure 12 arranged for supplying the pneumatic actuators (brakes) associated with the block 5 and the vacuum pneumatic circuit 10 arranged for supplying the locking members 2, in particular of the vacuum type (suction cups), associated with the block 5. Further, each block 5 features inside also the electric supply and/or piloting circuit 14, via the electric device 16 (for example a printed circuit), of the electric actuators (solenoid valves V) associated with the block 5.

In this embodiment, the locking system 1 comprises, as has been seen, a work surface formed by several groups of blocks 5, in particular of four groups 1' each formed by forty blocks 5 or modules, each with ten locking members 2. Each group 1' of blocks 5 may comprise, in particular, at least one table that is movable horizontally (for example in one or two directions) with respect to the other tables.

In this embodiment, a first table is fixed (devoid of a position adjusting actuator), a second table (in particular adjacent to a first side of the first table) is movable along a first axis (with a position adjusting actuator M), a third table (in particular adjacent to a second side of the first table) is movable along a second axis orthogonal to the first axis (with a position adjusting actuator M), a fourth table (in particular adjacent to a side of the second table and to a side of the third table) is movable both along the first axis and along the second axis (with two position adjusting actuators M).

The position adjusting actuators M, by means of which the reciprocal horizontal spacing between the various tables is adjusted, may comprise, in particular, linear actuators. The position of each table is adjustable on the horizontal plane independently of the other tables. This enables the workpiece support to be optimized.

Each group 1' of blocks 5 comprises, as has been seen, a lifting table 4 common to all the support rods 3 that enables all the locking members 2 of the group 1' of blocks 5 to be moved and positioned. Each support rod 3 is provided with an independent brake, so as to be able to position the locking member 2 at a vertical height (during the descent of the lifting table 4) that can be, if necessary, different from the vertical height of the other locking members 2.

Each block 5, or module, which in the specific embodiment comprises ten locking members 2 (even it is possible to provide a single block 5 with a different number of locking members 2), is so made as to receive the energy that is suitable for the operation of the locking system (in particular the electric power and piloting energy, the pneumatic pressure energy and the pneumatic vacuum pressure) at the moment of fitting the block 5 itself, in particular when the block 5 is fitted to the plate means 7 of the locking system 1, this fitting being achievable independently of the other blocks 5.

The set of the various blocks 5, joined to the plate means 7, may achieve a common network of operating circuits that enables the supply of various users to be rationalized such as pneumatic pressure, pneumatic vacuum, electric power and communication by field buses. This supply is achieved, in particular, by circuits or traces or tracks obtained inside the plate means 7, which plate means 7 may comprise, in particular, two superimposed (lower 71 and upper 72) plates (for example made of aluminium).

Dismantling, for possible maintenance, of a block 5 may occur from above by removing the block 5 from the plate means 7, after removing the connecting means 9 of removable type (for example of screw type).

It is possible in particular to provide for the electrical connections of the single block 5 to the interface side 8 on the plate means 7 being made by spring contacts (for example of the pogo-pin type), so as to facilitate the dismantling and the possible replacement of the single block 5, without affecting the other adjacent blocks.

It is possible, in particular, for the pneumatic circuit under pressure 12 on the single block 5 to be configured to drive one or more pneumatic actuators, for example of the brake, as said previously, and/or of other possible actuators that may be operationally associated with the locking member 2 or with the support rod 3.

The pneumatic actuators may be, in particular, controlled by electrically driven actuators (solenoid valves) and connected to the electric circuit 14 including, in particular, in the electric device 16 (printed circuit).

The locking members 2 may comprise, as in this embodiment, suction cups, even if other types of locking member are possible.

## Claims

1. Workpiece locking system, comprising:
- four or more locking members (2) which can be positioned so as to define a non-flat locking surface configured to hold a piece to be machined with a non-flat surface;
- for each locking member (2), a support rod (3) which extends vertically and carries a respective locking member (2), each support rod (3) being vertically movable independently of the other support rods (3) to make it possible to position the respective locking member (2) at a different vertical height compared to the other locking members (2);
- two or more blocks (5) each of which comprises at least two holes within each of which the support rod (3) of a respective locking member (2) is vertically movable, so that each block (5) is associated with at least two locking members (2), each of said two or more blocks (5) comprising at least one interface surface (6);
- plate means (7) comprising an interface side (8) interfaced with the interface surfaces (6) of said two or more blocks (5);
- connection means (9) configured to mount each of said two or more blocks (5) on said plate means (7) so that each block can be mounted and demounted independently of the other blocks;
**characterised in that** said plate means (7) comprises at least four holes within each of which a support rod (3) of a locking member (2) is vertically movable.

2. Locking system according to claim 1, comprising:
- for each block (5), at least one block-side operating circuit arranged on the respective block (5), configured for the operation of the respective block (5) and comprising at least one end arranged on said interface surface (6) of the respective block (5);
- at least one plate-side operating circuit arranged on said plate means (7) and communicating with said block-side operating circuits of said two or more blocks (5) at said interface side (8).

3. Locking system according to claim 2, wherein said locking members (2) comprise vacuum locking members, said at least one block-side operating circuit comprising a vacuum pneumatic circuit (10) for the operation of said vacuum locking members, said at least one plate-side operating circuit comprising a vacuum pneumatic circuit (11).

4. Locking system according to any one of claims 2 and 3, wherein said at least one block-side operating circuit comprises a pneumatic circuit under pressure (12) for the operation of at least one pneumatic actuator operatively associated with a respective locking member (2), said at least one plate-side operating circuit comprising a pneumatic circuit under pressure (13).

5. Locking system according to any one of claims 2 to 4, wherein said at least one block-side operating circuit comprises an electric circuit (14) for the operation of at least one electric actuator, in particular a solenoid valve (V), operatively associated with a respective locking member (2), said at least one plate-side operating circuit comprising an electric circuit (15).

6. Locking system according to claim 5, wherein said electric circuit (14) of the block-side operating circuit comprises, for each block, at least one electrical device (16), in particular at least one printed circuit, configured to receive electrical energy from said electric circuit (15) of the plate-side operating circuit and configured to control said electric actuators operatively associated with said locking members (2) of the respective block (5).

7. Locking system according to any one of claims 2 to 6, wherein said at least one block-side operating circuit comprises a fluid operating circuit and wherein said locking system comprises, for each block (5), at least one fluid discharge circuit (17) arranged on the respective block (5) and configured for discharging used fluid from said fluid operating circuit.

8. Locking system according to any one of claims 2 to 7, wherein said at least one plate-side operating circuit comprises connection means (11'; 13'; 15') connectable to an operating source, said operating source comprising, in particular, a source of vacuum, or a source of gas under pressure, or a source of electrical energy.

9. Locking system according to any one of the preceding claims, wherein said plate means (7) comprise a lower plate (71) and an upper plate (72) superimposed on each other, said lower plate (71) comprising said plate-side operating circuit and said upper plate (72) comprising said interface side (8) and a plurality of openings, at least one opening for each block (5), so as to put said plate-side operating circuit in communication with said block-side operating circuits of said two or more blocks (5); said at least one plate-side operating circuit comprising, in particular, a fluid operating circuit; sealing means (18; 19) being, in particular, arranged between said lower plate (71) and said upper plate (72) for hermetic sealing of said fluid operating circuit.

10. Locking system according to any one of claims 2 to 9, wherein said at least one plate-side operating circuit comprises a fluid operating circuit, said interface side (8) of said plate means (7) comprising a plurality of openings, at least an opening for each block (5), each of said openings being in fluid communication with said fluid operating circuit, between said interface side (8) and said interface surfaces (6) sealing means (20; 21) being arranged for the hermetic seal of each of said openings.

11. Locking system according to any one of the preceding claims, wherein said connecting means (9) comprise screw fixing means.

12. Numerical control machining center comprising at least one machining unit and at least one locking system (1) according to any one of the preceding claims.

## Patentansprüche

1. Werkstückverriegelungssystem, umfassend:
- vier oder mehr Verriegelungselemente (2), die positioniert werden können, um eine nicht ebene Verriegelungsoberfläche zu definieren, die konfiguriert ist, um ein zu bearbeitendes Teil mit einer nicht ebenen Oberfläche zu halten;
- für jedes Verriegelungselement (2), eine Stützstange (3), die sich vertikal erstreckt und ein jeweiliges Verriegelungselement (2) trägt, wobei jede Stützstange (3) unabhängig von den anderen Stützstangen (3) vertikal bewegbar ist, um es zu ermöglichen, das jeweilige Verriegelungselement (2) im Vergleich zu den anderen Verriegelungselementen (2) auf einer anderen vertikalen Höhe zu positionieren;
- zwei oder mehr Blöcke (5), von denen jeder mindestens zwei Löcher umfasst, wobei innerhalb jedem davon die Stützstange (3) eines jeweiligen Verriegelungselements (2) vertikal bewegbar ist, sodass jeder Block (5) mindestens zwei Verriegelungselementen (2) zugeordnet ist, jeder der zwei oder mehr Blöcke (5) umfassend mindestens eine Schnittstellenoberfläche (6);
- Plattenmittel (7), umfassend eine Schnittstellenseite (8), die mit den Schnittstellenoberflächen (6) der zwei oder mehr Blöcke (5) schnittstellenartig verbunden ist;
- Verbindungsmittel (9), die konfiguriert sind, um jeden der zwei oder mehr Blöcke (5) auf den Plattenmitteln (7) zu montieren, sodass jeder Block unabhängig von den anderen Blöcken montiert und demontiert werden kann; **dadurch gekennzeichnet, dass** die Plattenmittel (7) mindestens vier Löcher umfassen, wobei innerhalb jedem davon eine Stützstange (3) eines Verriegelungselements (2) vertikal bewegbar ist.

2. Verriegelungssystem nach Anspruch 1, umfassend:
- für jeden Block (5), mindestens eine blockseitige Betriebsschaltung, die auf dem jeweiligen Block (5) angeordnet ist, für den Betrieb des jeweiligen Blocks (5) konfiguriert ist und umfassend mindestens ein Ende, das auf der Schnittstellenoberfläche (6) des jeweiligen Blocks (5) angeordnet ist;
- mindestens eine plattenseitige Betriebsschaltung, die auf den Plattenmitteln (7) angeordnet ist und mit den blockseitigen Betriebsschaltungen der zwei oder mehr Blöcke (5) auf der Schnittstellenseite (8) kommuniziert.

3. Verriegelungssystem nach Anspruch 2, wobei die Verriegelungselemente (2) Vakuumverriegelungselemente umfassen, die mindestens eine blockseitige Betriebsschaltung umfassend eine pneumatische Vakuumschaltung (10) für den Betrieb der Vakuumverriegelungselemente, die mindestens eine plattenseitige Betriebsschaltung umfassend eine pneumatische Vakuumschaltung (11).

4. Verriegelungssystem nach einem der Ansprüche 2 und 3, wobei die mindestens eine blockseitige Betriebsschaltung eine pneumatische Schaltung unter Druck (12) für den Betrieb von mindestens einem pneumatischen Aktuator umfasst, der einem jeweiligen Verriegelungselement (2) wirkzugeordnet ist, die mindestens eine plattenseitige Betriebsschaltung umfassend eine pneumatische Schaltung unter Druck (13).

5. Verriegelungssystem nach einem der Ansprüche 2 bis 4, wobei die mindestens eine blockseitige Betriebsschaltung eine elektrische Schaltung (14) für den Betrieb von mindestens einem elektrischen Aktuator, insbesondere einem Magnetventil (V), umfasst, das einem jeweiligen Verriegelungselement (2) wirkzugeordnet ist, die mindestens eine plattenseitige Betriebsschaltung umfassend eine elektrische Schaltung (15).

6. Verriegelungssystem nach Anspruch 5, wobei die elektrische Schaltung (14) der blockseitigen Betriebsschaltung für jeden Block mindestens eine elektrische Vorrichtung (16), insbesondere mindestens eine gedruckte Schaltung, umfasst, die konfiguriert ist, um elektrische Energie von der elektrischen Schaltung (15) der plattenseitigen Betriebsschaltung zu empfangen und konfiguriert ist, um die elektrischen Aktuatoren zu steuern, die den Verriegelungselementen (2) des jeweiligen Blocks (5) wirkzugeordnet sind.

7. Verriegelungssystem nach einem der Ansprüche 2 bis 6, wobei die mindestens eine blockseitige Betriebsschaltung eine Fluidbetriebsschaltung umfasst und wobei das Verriegelungssystem für jeden Block (5) mindestens eine Fluidablassschaltung (17) umfasst, die an dem jeweiligen Block (5) angeordnet und zum Ablassen von verbrauchtem Fluid aus der Fluidbetriebsschaltung konfiguriert ist.

8. Verriegelungssystem nach einem der Ansprüche 2 bis 7, wobei die mindestens eine plattenseitige Betriebsschaltung Verbindungsmittel (11'; 13'; 15') umfasst, die mit einer Betriebsquelle verbindbar sind, die Betriebsquelle umfassend insbesondere eine Vakuumquelle oder eine Druckgasquelle oder eine elektrische Energiequelle.

9. Verriegelungssystem nach einem der vorstehenden Ansprüche, wobei die Plattenmittel (7) eine untere Platte (71) und eine obere Platte (72) umfassen, die übereinander eingerichtet sind, die untere Platte (71) umfassend die plattenseitige Betriebsschaltung und die obere Platte (72) umfassend die Schnittstellenseite (8) und eine Vielzahl von Öffnungen, mindestens eine Öffnung für jeden Block (5), um die plattenseitige Betriebsschaltung mit der blockseitigen Betriebsschaltung der zwei oder mehr Blöcke (5) in Kommunikation zu setzen; die mindestens eine plattenseitige Betriebsschaltung umfassend insbesondere eine Fluidbetriebsschaltung; wobei Dichtungsmittel (18; 19) insbesondere zwischen der unteren Platte (71) und der oberen Platte (72) zum hermetischen Abdichten der Fluidbetriebsschaltung angeordnet sind.

10. Verriegelungssystem nach einem der Ansprüche 2 bis 9, wobei die mindestens eine plattenseitige Betriebsschaltung eine Fluidbetriebsschaltung umfasst, die Schnittstellenseite (8) der Plattenmittel (7) umfassend eine Vielzahl von Öffnungen, mindestens eine Öffnung für jeden Block (5), wobei jede der Öffnungen in Fluidkommunikation mit der Fluidbetriebsschaltung steht, wobei zwischen der Schnittstellenseite (8) und den Schnittstellenoberflächen (6) Dichtungsmittel (20; 21) zum hermetischen Abdichten jeder der Öffnungen angeordnet sind.

11. Verriegelungssystem nach einem der vorstehenden Ansprüche, wobei die Verbindungsmittel (9) Schraubbefestigungsmittel umfassen.

12. Numerisch gesteuertes Bearbeitungszentrum, umfassend mindestens eine Bearbeitungseinheit und mindestens ein Verriegelungssystem (1) nach einem der vorstehenden Ansprüche.

## Revendications

1. Système de verrouillage de pièce, comprenant:
- quatre éléments de verrouillage (2) ou plus qui peuvent être positionnés de manière à définir une surface de verrouillage non plane conçue pour maintenir une pièce à usiner ayant un surface non plane;
- pour chaque élément de verrouillage (2), une tige de support (3) qui s'étend verticalement et porte un élément de verrouillage (2) respectif, chaque tige de support (3) étant mobile verticalement indépendamment des autres tiges de support (3) pour permettre de positionner l'élément de verrouillage (2) respectif à une hauteur verticale différente par rapport aux autres éléments de verrouillage (2);
- deux blocs (5) ou plus dont chacun comprend au moins deux trous à l'intérieur desquels la tige de support (3) d'un élément de verrouillage (2) respectif est mobile verticalement, de sorte que chaque bloc (5) est associé à au moins deux éléments de verrouillage (2), chacun desdits deux blocs (5) ou plus comprenant au moins une surface d'interface (6);
- des moyens de plaque (7) comprenant un côté interface (8) interface avec les surfaces d'interface (6) desdits deux blocs (5) ou plus;
- des moyens de liaison (9) conçus pour monter chacun desdits deux blocs (5) ou plus sur ledit moyen de plaque (7) de telle sorte que chaque bloc puisse être monté et démonté indépendamment des autres blocs ; **caractérisé en ce que** lesdits moyens de plaque (7) comprennent au moins quatre trous à l'intérieur de chacun desquels une tige de support (3) d'un élément de verrouillage (2) est mobile verticalement.

2. Système de verrouillage selon la revendication 1, comprenant:
- pour chaque bloc (5), au moins un circuit de fonctionnement côté bloc agencé sur le bloc (5) respectif, conçu pour le fonctionnement du bloc (5) respectif et comprenant au moins une extrémité agencée sur ladite surface d'interface (6) du bloc (5) respectif;
- au moins un circuit de fonctionnement côté plaque agencé sur ledit moyen de plaque (7) et communiquant avec lesdits circuits de fonctionnement côté bloc desdits deux blocs (5) ou plus au niveau dudit côté interface (8).

3. Système de verrouillage selon la revendication 2, dans lequel lesdits éléments de verrouillage (2) comprennent des éléments de verrouillage à vide, ledit au moins un circuit de fonctionnement côté bloc comprenant un circuit pneumatique à vide (10) pour le fonctionnement desdits éléments de verrouillage à vide, ledit au moins un circuit de fonctionnement côté plaque comprenant un circuit pneumatique à vide (11).

4. Système de verrouillage selon l'une quelconque des revendications 2 et 3, dans lequel ledit au moins un circuit de fonctionnement côté bloc comprend un circuit pneumatique sous pression (12) pour le fonctionnement d'au moins un actionneur pneumatique associé de manière opérationnelle à un élément de verrouillage (2) respectif, ledit au moins un circuit de fonctionnement côté plaque comprenant un circuit pneumatique sous pression (13).

5. Système de verrouillage selon l'une quelconque des revendications 2 à 4, dans lequel ledit au moins un circuit de fonctionnement côté bloc comprend un circuit électrique (14) pour le fonctionnement d'au moins un actionneur électrique, en particulier une électrovanne (V), associé de manière opérationnelle à un élément de verrouillage (2) respectif, ledit au moins un circuit de fonctionnement côté plaque comprenant un circuit électrique (15).

6. Système de verrouillage selon la revendication 5, dans lequel ledit circuit électrique (14) du circuit de fonctionnement côté bloc comprend, pour chaque bloc, au moins un dispositif électrique (16), en particulier au moins un circuit imprimé, configuré pour recevoir de l'énergie électrique à partir dudit circuit électrique (15) du circuit de fonctionnement côté plaque et configuré pour commander lesdits actionneurs électriques associés de manière opérationnelle auxdits éléments de verrouillage (2) du bloc (5) respectif.

7. Système de verrouillage selon l'une quelconque des revendications 2 à 6, dans lequel ledit au moins un circuit de fonctionnement côté bloc comprend un circuit de fonctionnement fluidique et dans lequel ledit système de verrouillage comprend, pour chaque bloc (5), au moins un circuit de décharge fluidique (17) agencé sur le bloc (5) respectif et conçu pour décharger le fluide usagé dudit circuit de fonctionnement fluidique.

8. Système de verrouillage selon l'une quelconque des revendications 2 à 7, dans lequel ledit au moins un circuit de fonctionnement côté plaque comprend des moyens de liaison (11'; 13'; 15') pouvant être relié à une source de fonctionnement, ladite source de fonctionnement comprenant, en particulier, une source de vide, ou une source de gaz sous pression, ou une source d'énergie électrique.

9. Système de verrouillage selon l'une quelconque des revendications précédentes, dans lequel lesdits moyens de plaque (7) comprennent une plaque inférieure (71) et une plaque supérieure (72) superposées l'une sur l'autre, ladite plaque inférieure (71) comprenant ledit circuit de fonctionnement côté plaque et ladite plaque supérieure (72) comprenant ledit côté interface (8) et une pluralité d'ouvertures, au moins une ouverture pour chaque bloc (5), de manière à mettre ledit circuit de fonctionnement côté plaque en communication avec lesdits circuits de fonctionnement côté bloc desdits deux blocs (5) ou plus ; ledit au moins un circuit de fonctionnement côté plaque comprenant, en particulier, un circuit de fonctionnement fluidique, des moyens d'étanchéité (18; 19) étant, en particulier, agencés entre ladite plaque inférieure (71) et ladite plaque supérieure (72) pour la fermeture hermétique dudit circuit de fonctionnement fluidique.

10. Système de verrouillage selon l'une quelconque des revendications 2 à 9, dans lequel ledit au moins un circuit de fonctionnement côté plaque comprend un circuit de fonctionnement fluidique, ledit côté interface (8) desdits moyens de plaque (7) comprenant une pluralité d'ouvertures, au moins une ouverture pour chaque bloc (5), chacune desdites ouvertures étant en communication fluidique avec ledit circuit de fonctionnement fluidique, entre ledit côté interface (8) et lesdites surfaces d'interface (6), des moyens d'étanchéité (20; 21) étant agencés pour la fermeture hermétique de chacune desdites ouvertures.

11. Système de verrouillage selon l'une quelconque des revendications précédentes, dans lequel lesdits moyens de liaison (9) comprennent un moyen de fixation par vis.

12. Centre d'usinage à commande numérique comprenant au moins une unité d'usinage et au moins un système de verrouillage (1) selon l'une quelconque des revendications précédentes.
